# EUROPEAN PATENT SPECIFICATION

(11) **EP 1 162 159 B1**
(45) Date of publication and mention of the grant of the patent: **10.12.2003**
(21) Application number: 01112940.0
(22) Date of filing: 06.06.2001
(51) Int. Cl.: B65F 1/00

(54) **Raw garbage liquefying apparatus and method of managing same**
Appareil pour liquéfier des déchets et son méthode de gestion
Vorrichtung zur Verflüssigung von Abfall und Verwaltungsverfahren dafür

(30) Priority: 08.06.2000 JP 2000172071
(43) Date of publication of application: 12.12.2001
(73) Proprietor: Exy Concept Co., Ltd., Kashiwa-shi, Chiba 277-0882 (JP)
(72) Inventor: Fujiwara, Shintaro, Kabushiki Kaisha Exy, Chiba 279-0043 (JP)
(74) Representative: Fiener, Josef

(56) References cited:
- EP-A- 0 788 984
- DE-U- 9 416 305
- DE-U- 29 605 083
- DE-U- 29 814 629
- FR-A- 2 705 952
- US-A- 4 767 065
- PATENT ABSTRACTS OF JAPAN vol. 2000, no. 07, 29 September 2000 (2000-09-29) & JP 2000 107622 A (KANIE SEISAKUSHO:KK), 18 April 2000 (2000-04-18)

## Description

### BACKGROUND OF THE INVENTION

### Field of the Invention

The present invention relates to raw garbage liquefying apparatus and method as recited in the preamble of claims 1 and 4 and disclosed in patent document JP 2000 107 622 A.

### Description of the Related Art

Generally, collection of raw garbage is performed by a method wherein the date or day of the week on which a raw garbage collection vehicle tours around garbage collection points, is determined, and each household is requested to place their raw garbage at a predetermined collection point, early on the day on which the raw garbage collection vehicle passes by, for example. There is also another method wherein raw garbage is collected by previously arranged by telephone or the like so that the collection vehicle is requested to pass by a prescribed point at a prescribed date and time.

However, in methods where raw garbage is placed directly at garbage collection points, problems arise in that the garbage may be attacked by cats, crows, or the like, or it may produce unpleasant odours, before the collection vehicle arrives at the garbage collection point.

Therefore, in order to prevent the raw garbage from being attacked by cats, crows, etc., it is necessary to take measures such as providing a raw garbage collection container at the garbage collection point, placing a net over the garbage bags or the like.

However, in conventional methods using containers, nets and the like, such situations may sometimes occur that the quantity of raw garbage exceeds the storage capacity of the containers, or the generation of unpleasant odours cannot sufficiently suppressed. Hence, it causes problems to determine where garbage collection points are located because hygiene-related problems may occur in the neighborhood of the collection points.

Furthermore, if a large amount of raw garbage happens to be produced by household, then it must either request another visit of the raw garbage collection vehicle, or the garbage must be stored in the household until the collection vehicle visits next time.

Since raw garbage will decompose with the passage of time, if the raw garbage is stored inside the household, problems arise with regard to hygiene, for instance, unpleasant odours are produced.

To solve the problems, a raw garbage collection system has been proposed, wherein raw garbage liquefying apparatuses are provided in distributed locations adjacent to respective households or the like, and the raw garbage liquefied by the raw garbage liquefying apparatus is collected and stored in highly sealed liquefied raw garbage deposit tanks. Then, the liquefied raw garbage deposited in the liquefied raw garbage deposit tanks is recovered periodically by touring collection vehicles, whereby raw garbage can be collected without dispersing unpleasant smells into the surrounding area.

By means of this raw garbage collection system, it is possible to place raw garbage into a raw garbage liquefying apparatus at any time, and hence generation of unpleasant odours due to decomposition of the raw garbage can be prevented, thereby providing significant merits in terms of hygiene.

Moreover, since only raw garbage is stored in the deposit tanks, it is possible for the raw garbage collected by the touring collection vehicle to be used as a material resource, such as a fuel for a raw garbage power generation device, a raw material for organic fertilizer, etc.

However, when charging system is input for the collection of raw garbage, it is necessary to identify the user who places raw garbage in the raw garbage liquefying apparatuses, and to provide a measure to prevent anyone other than appropriate users from placing garbage in the devices.

Furthermore, if the raw garbage is to be used as a raw material, then it is necessary to prevent anyone other than an appropriate collector from collecting the garbage.

### SUMMARY OF THE INVENTION

Therefore, it is an object of the present invention to provide raw garbage liquefying apparatus and method of managing same whereby users of the raw garbage liquefying apparatus can be identified.

The raw garbage liquefying apparatus according to the present invention is defined by claim 1.

With this configuration, only appropriate users are allowed to inputting their raw garbage into the raw garbage liquefying apparatuses, and therefore it is possible to prevent use of the raw garbage liquefying apparatus by anyone other than appropriate users.

Moreover, with the user identifying means comprising a card reader provided in the vicinity of the input opening; and identifying means for identifying the user on the basis of information read out from a card carried by the user, it is possible to identify the user by using an existing card specifying a person, such as a credit card.

The identifying means identifies whether or not the user is appropriate from the information read out by the card reader from a card carried by the user by inquiring through wireless communications at the central station that manages the raw garbage liquefying apparatus.

With this configuration, it is not necessary to provide an identifying device at each of the liquefying apparatuses, and moreover, since inquiry is made at the central station, it is possible to process a large amount of read-out information in a short period of time.

Optionally it is possible to adopt raw garbage input managing means comprising a door which opens and closes the input opening; and door opening and closing control means for opening the door by remote operation by wireless communications from the central station, if the central station judges the user to be appropriate.

With this configuration, only appropriate users are allowed to inputting raw garbage into the input opening, and inappropriate persons can be prevented from using the device.

Also, collection of liquefied raw garbage by any persons other than appropriate collectors is prevented. Therefore, it is possible to avoid unpleasant situations caused by inappropriate persons where, for instance, the discharge opening is opened and the liquefied raw garbage is scattered, or the like.

The collector identifying means comprises a card reader provided in the vicinity of the discharge opening; and identifying means for identifying the collector on the basis of information read out by the card reader from a card carried by the collector.

With this configuration, it is possible to use an existing card specifying the owner, such as a credit card, or the like, for identifying the collector.

Moreover, the identifying means identifies whether or not the collector is appropriate by conducting inquiry about the information read out by the card reader from a card carried by the collector, through wireless communications at the central station that manages the raw garbage liquefying apparatus.

With this configuration, it is not necessary to provide an identifying device at the liquefying apparatus, and furthermore, since inquiry is made at the central station, it is possible to process a large amount of read-out information in a short period of time.

The raw garbage discharge managing means may comprise keying means for keying the discharge opening; and key-releasing control means for releasing the keying provided by the keying means, by remote operation by wireless communications from the central station, if the central station judges the collector to be appropriate.

With this configuration, only appropriate collectors are able to collect raw garbage from the discharge opening, and therefore collection by inappropriate persons can be prevented.

The present invention is a method of managing raw garbage liquefying apparatuses situated in a plurality of distributed locations, for liquefying raw garbage as defined by claim 4.

With this configuration, it is possible to prevent use of the raw garbage liquefying apparatus by persons other than appropriate users.

Here, identification of the user is carried out on the basis of information read out from a card carried by the user, and therefore an existing card specifying the owner, such as a credit card, or the like, can be used for identifying the user.

Moreover, a configuration is adopted wherein judgement of whether or not the user is appropriate is carried out by inquiry about the information read out from the card through wireless communications at the central station managing the raw garbage liquefying apparatus.

With this configuration, it is not necessary to provide an identifying device at the liquefying apparatus, and furthermore, since inquiry is made at the central station, it is possible to process a large amount of read-out information in a short period of time.

Moreover, by optionally providing a door which opens and closes the input opening, the door being opened by remote operation by wireless communications from the central station, if the central station judges the user to be appropriate, it is possible to permit input of raw garbage only to appropriate users.

Furthermore, by optionally adopting a configuration wherein the amount of raw garbage input via the input opening is measured and the input volume is totalised and managed for each user, it is possible to manage accurately the amount of raw garbage input by respective users, within a prescribed time period.

Moreover, charging or payment may be conducted for the use of the raw garbage liquefying apparatus, on the basis of the input volume of raw garbage as totalised and managed for each user.

Therefore, charging or payment for the use of the raw garbage liquefying apparatus by the user can be conducted according to the amount of raw garbage input by each user.

Also, collection of liquefied raw garbage by persons other than appropriate collectors is prevented, in addition to which it is also possible to avoid unpleasant situations caused by an inappropriate person, where, for instance, the discharge opening is opened and the liquefied raw garbage is scattered, or the like.

Since identification of the collector is carried out on the basis of information read out from a card carried by the user, it is possible to assign cards to each collection operating company, or each touring collection vehicle, rather than to each individual collector.

Moreover, the method of the invention allows the judgement of whether or not the collector is appropriate to be carried out by inquiry about the information read out from the card through wireless communications at the central station managing the raw garbage liquefying apparatus.

With this configuration, it is not necessary to provide an identifying device at the liquefying apparatuses, and moreover, since inquiry is made at the central station, it is possible to process a large amount of read-out information in a short period of time.

There may also be provided keying means for keying the discharge opening; the key being released by remote operation by wireless communications from the central station, if the central station judges the collector to be appropriate.

With this configuration, only appropriate collectors are able to collect raw garbage from the discharge opening, and therefore collection by inappropriate persons can be prevented.

Moreover, by optionally measuring the amount of discharged raw garbage output via the discharge opening and totalising and managing the discharge volume for each raw garbage liquefying apparatus, then the discharged amount of liquefied raw garbage collected from each raw garbage liquefying apparatus within a prescribed time period can be managed accurately.

A configuration may be adopted wherein charging or payment is conducted for the use of the raw garbage liquefying apparatus, on the basis of the discharged volume of raw garbage as totalised and managed for each raw garbage liquefying apparatus.

With this configuration, charging or payment to a collector for the use of the raw garbage liquefying apparatus is conducted on the basis of the collected volume of raw garbage by the collector.

In raw garbage liquefying apparatus and method of managing same according to the present invention, a user of the raw garbage liquefying apparatus inputting raw garbage via an input opening is identified, and the user is only permitted to inputting the raw garbage via the input opening if that user is judged to be appropriate.

According to the present invention, input of raw garbage is only permitted when a user is judged to be appropriate, and therefore any users judged to be inappropriate can be prevented from using the raw garbage liquefying apparatus.

With this configuration, charging or payment is made accurately, according to the amount of raw garbage collected by each collector, for a collector's use of the raw garbage liquefying apparatus.

Moreover, a person collecting the liquefied raw garbage via a discharge opening is identified, and the collector is only permitted to discharge the liquefied raw garbage from the discharge opening if that collector is judged to be appropriate.

Therefore, it is possible to prevent collection of liquefied raw garbage by any inappropriate collectors, or any unpleasant situations wherein the discharge opening is opened and the liquefied raw garbage is caused to flow out.

Moreover, since the users and respective input amounts or the collectors and respective collection amounts can be managed jointly, it is optionally possible to conduct payment or charging accurately, corresponding to the amount of garbage input or collected.

### BRIEF DESCRIPTION OF THE DRAWINGS

Fig. 1 is a conceptual diagram of a method of managing a raw garbage liquefying apparatus according to the present invention;
Fig. 2 is a conceptual diagram of a raw garbage liquefying apparatus according to an embodiment of the present invention;
Fig. 3 is a conceptual diagram of a method of managing raw garbage liquefying apparatus according to an embodiment of the present invention;
Fig. 4 is a conceptual diagram of a method of managing raw garbage liquefying apparatus according to an embodiment of the present invention; and
Fig. 5 is a conceptual diagram of a method of managing raw garbage liquefying apparatus according to the present invention.

### DESCRIPTION OF THE PREFERRED EMBODIMENTS

Embodiment of the raw garbage liquefying apparatus and a method of managing same according to the present invention is now described with reference to the accompanying drawings.

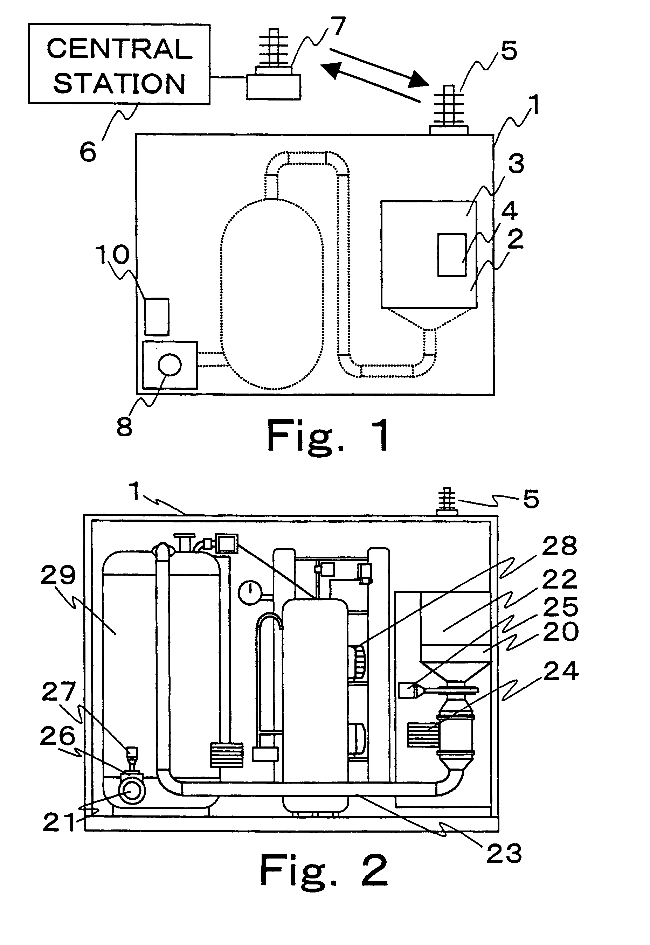

Fig. 1 is a conceptual diagram illustrating a raw garbage liquefying apparatus 1 and a method of managing same according to the present invention, in which there are provided a raw garbage liquefying apparatus 1, central station 6, radio communications device 5, 7 and card readers 4, 10.

As shown in Fig. 2, the raw garbage liquefying apparatus 1 comprises an input opening 20 for inputting raw garbage, a storage unit 29 for storing liquefied raw garbage, and a discharge opening 21 for discharging liquefied raw garbage, the input opening 20 and the storage unit 29 being connected by means of an input section 23, and the storage unit 29 and the discharge opening 21 being connected by means of a discharging section 26.

An input opening door 22 is provided in the input opening 20, a chopping cutter 24 and input opening shut-off valve 25 are provided in the input section 23, and a discharge shut-off valve 27 is provided in the discharging section 26.

The raw garbage liquefying apparatus 1 is also provided with a gas exhaust device 28 for reducing the air pressure of the interior of the input section 23 and the storage unit 29.

The input opening door 22 and the discharge opening 21 are normally locked by means of keys (not illustrated in the diagrams).

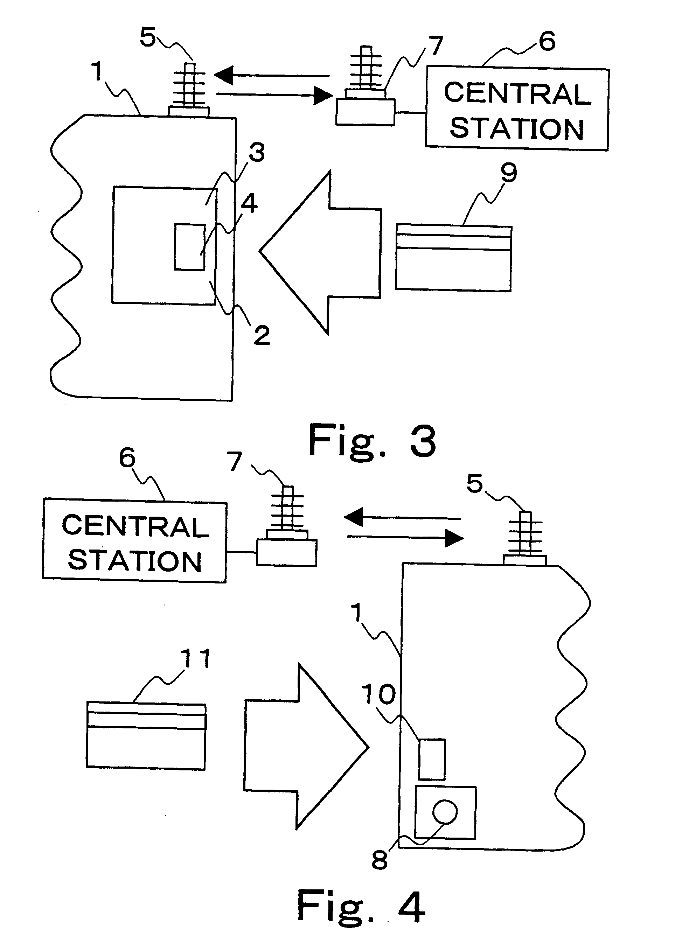

As shown in Fig. 3, when inputting raw garbage to the raw garbage liquefying apparatus 1, firstly, the card reader 4 reads in data from a card 9 owned by the user, and the information read out from the card is sent to the central station 6 via the radio communications devices 5, 7.

If the central station 6 judges that the user is an appropriate user, then it releases the key provided at the input opening door 3, by means of the radio communications devices 5, 7, thereby allowing raw garbage to be input via the input opening 2.

Alternatively, rather than simply releasing a key, it is possible for the input opening door 3 to be opened by operating a driving device (not illustrated), according to a command from the central station 6.

Referring to Fig. 2, at the raw garbage liquefying apparatus 1, once the gas in the interior of the input section 23 and the storage unit 29 has been removed by the gas exhaust device 28 while the input opening shut-off valve 25 and the discharge opening shut-off valve 27 have closed, the key of the input opening door 22 is released according to a command from the central station 6.

Raw garbage is then input via the input opening 20, and when the input opening door 22 is closed, the input opening shut-off valve 25 is opened and the input raw garbage is conveyed into the storage unit 29 due to the pressure difference between the input opening 20 and the storage unit 29. The raw garbage is then chopped and liquefied by the chopping cutter 24.

Thereupon, when collecting the liquefied raw garbage stored in the raw garbage liquefying apparatus 1, firstly, as shown in Fig. 4, the card reader 10 reads out data from a card 11 owned by the collector and sends the information read out from the card to the central station 6, by means of the radio communications device 5, 7.

If the central station 6 judges that the collector is an appropriate collector, then it causes the key provided at the discharge opening 8 to be released, by means of the radio communications device 5, 7, thereby allowing the liquefied raw garbage to be collected from the discharge opening 8.

The collector may connect a hose linked to the tank of the collection vehicle to the discharge opening, and cause the liquefied raw garbage to be conveyed into the tank of the collection vehicle by means of suction from the collection vehicle, or, by applying pressure to the liquefied raw garbage from the raw garbage liquefying apparatus.

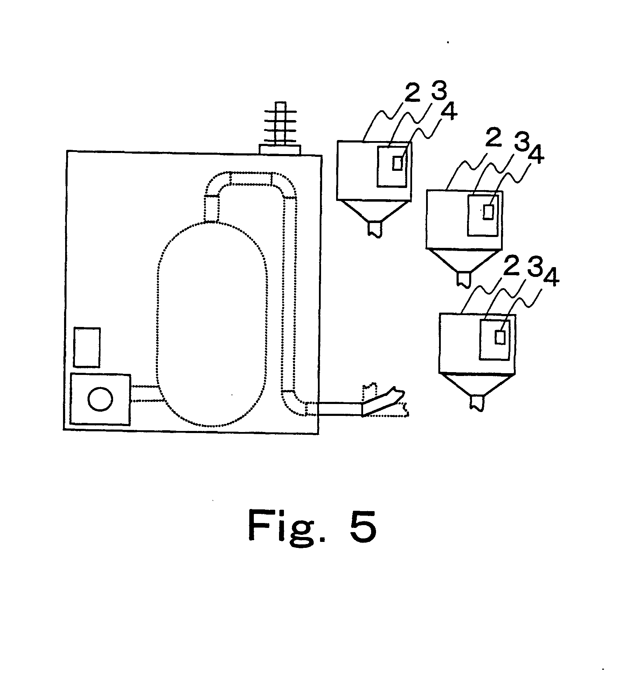

As shown in Fig. 5, it is also possible to liquefy and accumulate raw garbage input from a plurality of input openings 2, in a single raw garbage liquefying apparatus, and to collect the raw garbage in a single operation.

In this, if the users situate the input openings 2 in predetermined locations, such as respective households, kitchens, or the like, then it is possible to identify and manage the users by means of the input opening 2 where the raw garbage is input, without providing a card reader 4 or key.

Moreover, by providing a measuring device for measuring the amount of raw garbage input into the raw garbage liquefying apparatus, and transmitting the amount of raw garbage input to the central station, it is possible to manage the raw garbage input amount for each user, at the central station.

Therefore, charging or payment for the use of the raw garbage liquefying apparatus can be conducted in accordance with the amount of raw garbage input by each user.

The measuring device is able to measure the amount of input raw garbage not only by simply measuring the weight or volume of raw garbage input via the input opening, but also from the increase in the stored amount of liquefied raw garbage by using an storage sensor (not illustrated) for detecting the amount of liquefied raw garbage stored in the storage unit.

By providing a measuring device which measures the volume of liquefied raw garbage discharged from the raw garbage liquefying apparatus and transmits this amount of discharged raw garbage to the central station, it is possible to manage the amount of discharged raw garbage for each raw garbage liquefying apparatus, at the central station.

A plurality of collectors may collect the raw garbage from a single raw garbage liquefying apparatus. In that case, the central station can manage the amount of liquefied raw garbage collected by each collector.

Consequently, charging or payment for collection of the liquefied raw garbage can be conducted to each collector, according to the amount of raw garbage collected.

In order to measure the amount of liquefied raw garbage collected, if a measuring sensor is provided which detects the amount of liquefied raw garbage stored in the collection tank of the collection vehicle recovering the raw garbage, rather than simply measuring the amount of liquefied raw garbage collected by means of the amount of liquefied raw garbage flowing out of the raw garbage liquefying apparatus, then the increase in the amount of stored liquefied raw garbage can be measured and transmitted from the collection vehicle to the central station as a collection amount.

Moreover, in order to identify the user or collector, by using a card which allows data to be written and updated such as a rewrite card, the user or collector can be identified by means of the card readers, and required information relating to the user or collector such as the amount of raw garbage input or collected by the user, can be written to the card.

Therefore, the user or collector is able readily to manage their own raw garbage input amount or collection amount, and the like.

Furthermore, by using a credit card, prepaid card, or the like, to identify the user or collector, it is possible not only to confirm the user or collector, but also to apply a charge corresponding to the amount of raw garbage input or collected by the user or collector.

## Claims

1. A raw garbage liquefying apparatus (1), for liquefying raw garbage input via an input opening (2, 20) by a chopping cutter (24), storing the liquefied raw garbage in a storage unit (29), and discharging the liquefied raw garbage stored in the storage unit from a discharge opening (8, 21) for collection, **characterized in that** it comprises.
identifying means for identifying a user who wants to input raw garbage via the input opening of the raw garbage liquefying apparatus and/or for identifying a collector collecting liqufied raw garbage from the discharge opening ; and
managing means for enabling the input of raw garbage via the input opening only in cases where the user identified by the user identifying means is judged to be appropriate and/or for enabling discharge of the liquefied raw garbage from the discharge opening only in cases where the collector identified by the collector identifying means is judged to be appropriate;
wherein the identifying means comprises:
a card reader (4, 10) provided in a vicinity of the input opening and/or the discharge opening, for reading information from a card (9, 11) carried by the user and/or the collector; and
identification means for identifying the user and/or collector based on the information read out by the card reader from the card carried by the user and/or collector; and
wherein the identification means identifies whether or not e user and/or collector is appropriate by inquiring at a central station (6) managing the raw garbage liquefying apparatus about the information read out by the card reader from the card carried by the user and/or collector by wireless communications.

2. The raw garbage liquefying apparatus according to claim 1, wherein the managing means for enabling the input of raw garbage comprises:
a door (3, 22) which opens and closes the input opening; and
door opening and closing control means for opening the door by remote operation by wireless communications from the central station if the central station judges the user to be appropriate.

3. The raw garbage liquefying apparatus according to claim 1, wherein the managing means for enabling discharge of the liquefied raw garbage comprises: keying means for keying the discharge opening; and key-releasing control means for releasing the keying provided by the keying means, by remote operation by wireless communications from the central station, if the central station judges the collector to be appropriate.

4. A method of managing raw garbage liquefying apparatus (1) situated in a plurality of locations, for liquefying raw garbage input via an input opening, (2, 20) by a chopping cutter (24), storing the liquefied raw garbage in a storage unit (29), and discharging the liquefied raw garbage stored in the storage unit from a discharge opening (8, 21) for collection, **characterized in that** it comprises the steps of:
identifying a user who wishes to input raw garbage via the input opening of the raw garbage liquefying apparatus and/or identifying a collector who whishes to collect liquefied raw garbage from the discharge opening; and
enabling input of raw garbage via the input opening only in cases where the user is judged to be appropriate and/or enabling collection of liquefied raw garbage from the discharge opening only in cases where the collector is judged to be appropriate;
wherein identification of the user and/or collector is carried out based on information read out from a card (9, 11) carried by the user and/or collector; and,
wherein judgement of whether or not the user and/or collector is appropriate is carried out by inquiring at a central station (6) managing the raw garbage liquefying apparatus about the information read out from the card by wireless communications.

5. The method of managing raw garbage liquefying apparatus according to claim 4, wherein the raw garbage liquefying apparatus comprises a door (3, 22) which opens and closes the input opening, and the door is opened by remote operation by wireless communications from the central station, if the central station judges the user to be appropriate.

6. The method of managing raw garbage liquefying apparatus according to claim 4, wherein the amount of input raw garbage input via the input opening is measured and the input volume is totalised and managed for each user.

7. The method of managing raw garbage liquefying apparatus according to claim 6, wherein charging or payment is conducted for use of the raw garbage liquefying apparatus based on the input volume of raw garbage as totalised and managed for each user..

8. The method of managing raw garbage liquefying apparatus according to claim 4, wherein the raw garbage liquefying apparatus comprises keying means for keying the discharge opening, the key means being released by remote operation by wireless communications from the central station if the central station judges the collector to be appropriate.

9. The method of managing raw garbage liquefying apparatus according to claim 4, wherein the amount of discharged raw garbage output via the discharge opening is measured and the discharge volume is totalised and managed for each raw garbage liquefying apparatus.

10. The method of managing raw garbage liquefying apparatus according to claim 9, wherein charging or payment is conducted for the use of the raw garbage liquefying apparatus, based on the discharged volume of raw garbage as totalised and managed for each raw garbage liquefying apparatus.

## Patentansprüche

1. Vorrichtung zur Verflüssigung von Abfall (1), der durch eine Einlass-Öffnung (2, 20) eingelassen und über einen Häcksler (24) verflüssigt wird, wobei der verflüssigte Abfall in einem Sammelbehälter (29) gelagert und der im Sammelbehälter gelagerte verflüssigte Abfall durch eine Auslass-Öffnung (8, 21) zum Einsammeln abgegeben wird, **dadurch gekennzeichnet, dass** sie umfasst:
Identifikationsmittel zur Identifikation eines Anwenders, der Abfall durch die Einlass-Öffnung der Vorrichtung zur Verflüssigung von Abfall einfüllen möchte und/oder zur Identifikation eines Einsammlers, der verflüssigten Abfall aus der Auslass-Öffnung einsammeln möchte; und
Verwaltungsmittel, damit das Einfüllen von Abfall durch die Eintass-Öffnung nur ermöglicht wird, wenn der vom Anwender-Identifikationsmittel erkannte Anwender als zugelassen beurteilt wird und/oder zum Ermöglichen des Auslassens von verflüssigtem Abfall aus der Auslass-Öffnung, nur wenn der vom Einsammler-Identifikationsmittel erkannte Einsammler als zugelassen beurteilt wird;
wobei das Identifikationsmittel umfasst:
ein Kartenlesegerät (4,10), vorgesehen in unmittelbarer Nähe der Einlass-Öffnung und/oder der Auslass-Öffnung, zum Lesen von Informationen von einer Karte (9, 11), die vom Anwender und/oder Einsammler mitgeführt wird; und
Identifikationsmittel zum Erkennen des Anwenders und/oder Einsammlers, basierend auf den Informationen, die vom Kartenlesegerät von der Karte abgelesen werden, die der Anwender und/oder der Einsammler mitführt; und
wobei das Identifikationsmittel erkennt, ob der Anwender und/oder Einsammler zugelassen ist, indem es in einer Zentrale (6), die die Vorrichtung zur Verflüssigung von Abfall verwaltet, mittels drahtloser Kommunikation die Informationen nachfragt, die vom Kartenlesegerät von der Karte abgelesen wurden, die der Anwender und/oder der Einsammler mitführt.

2. Vorrichtung zur Verflüssigung von Abfall gemäß Anspruch 1, wobei das Verwaltungsmittel, das das Einfüllen von Abfall ermöglicht, umfasst:
eine Tür (3, 22), die die Eintass-Öffnung öffnet und schließt; und
ein Türöffnungs- und Schließ-Steuerungsmittel zum Öffnen der Tür mittels Fernbedienung durch drahtlose Kommunikation von der Zentrale, falls die Zentrale beurteilt, dass der Anwender zugelassen ist.

3. Vorrichtung zur Verflüssigung von Abfall gemäß Anspruch 1, wobei das Verwaltungsmittel, das das Auslassen des verflüssigten Abfalls ermöglicht, umfasst:
Schließmittel zum Verschließen der Auslass-Öffnung;
und Steuerungsmittel zum Lösen des vom Schließmittel verursachten Verschließens mittels Fernbedienung durch drahtlose Kommunikation von der Zentrale, falls die Zentrale den Einsammter als zugelassen beurteilt.

4. Verwaltungsverfahren für eine Vorrichtung zur Verflüssigung von Abfall (1), die sich an einer Vielzahl von Orten befindet, wobei der durch eine Einlass-Öffnung (2, 20) eingelassene Abfall mittels eines Häckslers (24) verflüssigt wird, der verflüssigte Abfall in einem Sammelbehälter (29) gelagert und der verflüssigte, im Sammelbehälter gelagerte Abfall durch eine Auslass-Öffnung (8, 21) zum Einsammeln abgegeben wird, **dadurch gekennzeichnet, dass** es folgende Schritte umfasst:
Erkennen eines Anwenders, der Abfall durch die Einlass-Öffnung der Vorrichtung zur Verflüssigung von Abfall einlassen möchte, und/oder Erkennen eines Einsammlers, der verflüssigten Abfall aus der Auslass-Öffnung einsammeln möchte; und
Ermöglichen des Einlassens von Abfall durch die Einlass-Öffnung, nur wenn der Anwender als zugelassen beurteilt wird und/oder Ermöglichen des Einsammelns von verflüssigtem Abfall aus der Auslass-Öffnung, nur wenn der Einsammler als zugelassen beurteilt wird;
wobei die Identifikation des Anwenders und/oder Einsammlers durchgeführt wird basierend auf den Auskünften, die von einer Karte (9, 11 ) abgelesen werden, die vom Anwender und/oder Einsammler mitgeführt wird; und
wobei die Beurteilung, ob der Anwender und/oder Einsammler zugelassen ist, durch Nachfrage in einer Zentrale (6) durchgeführt wird, die die Vorrichtung zur Verflüssigung von Abfall über die Auskünfte, die sie mittels drahtloser Kommunikation von der Karte abliest, verwaltet.

5. Verwaltungsverfahren für die Vorrichtung zur Verflüssigung von Abfall gemäß Anspruch 4, wobei die Vorrichtung zur Verflüssigung von Abfall eine Tür (3, 22) umfasst, die die Einlass-Öffnung öffnet und schließt, und die Tür mittels Fernbedienung durch drahtlose Kommunikation von der Zentrale geöffnet wird, falls die Zentrale den Anwender als zugelassen beurteilt.

6. Verwaltungsverfahren für die Vorrichtung zur Verflüssigung von Abfall gemäß Anspruch 4, wobei die Menge des eingelassenen Abfalls, die durch die Einlass-Öffnung eingelassen wurde, gemessen wird und die eingelassene Menge berechnet und für jeden Anwender verwaltet wird.

7. Verwaltungsverfahren für die Vorrichtung zur Verflüssigung von Abfall gemäß Anspruch 6, wobei Berechnung oder Zahlung durchgeführt wird für die Benutzung der Vorrichtung zur Verflüssigung von Abfall, basierend auf der eingelassenen Menge von Abfall, wie berechnet und für jeden Anwender verwaltet.

8. Verwaltungsverfahren für die Vorrichtung zur Verflüssigung von Abfall gemäß Anspruch 4, wobei die Vorrichtung zur Verflüssigung von Abfall Schließmittel zum Verschließen der Auslass-Öffnung umfasst und das Schließmittel von der Zentrale durch Fernbedienung mittels drahtloser Kommunikation gelöst wird, falls die Zentrale den Einsammler als zugelassen beurteilt.

9. Verwaltungsverfahren für die Vorrichtung zur Verflüssigung von Abfall gemäß Anspruch 4, wobei die Menge des ausgelassenen Abfalls, ausgegeben durch die Auslass-Öffnung, gemessen wird und die ausgelassene Menge berechnet und für jede Vorrichtung zur Verflüssigung von Abfall verwaltet wird.

10. Verwaltungsverfahren für die Vorrichtung zur Verflüssigung von Abfall gemäß Anspruch 9, wobei Berechnung oder Zahlung erfolgt für die Nutzung der Vorrichtung zur Verflüssigung von Abfall, basierend auf der ausgelassenen Menge von Abfall, wie berechnet und für jede Vorrichtung zur Verflüssigung von Abfall verwaltet.

## Revendications

1. Dispositif (1) de liquéfaction de déchets bruts pour liquéfier des déchets bruts introduits par l'intermédiaire d'une ouverture d'entrée (2, 20) par un couteau hacheur (24), stocker les déchets bruts liquéfiés dans l'unité de stockage (29) et décharger les déchets bruts liquéfiés stockés dans l'unité de stockage par une ouverture de décharge (8, 21) pour leur collecte,
**caractérisé en ce qu'**il comprend
des moyens d'identification pour identifier un utilisateur qui désire introduire des déchets bruts par l'intermédiaire de l'ouverture d'entrée du dispositif de liquéfaction de déchets bruts et pour identifier un agent de collecte collectant les déchets bruts liquéfiés délivrés par l'ouverture de décharge; et
des moyens de gestion pour autoriser l'entrée de déchets bruts par l'intermédiaire de l'ouverture d'entrée uniquement dans les cas où l'utilisateur identifié par les moyens d'identification d'utilisateur est évalué comme approprié et pour autoriser la décharge des déchets bruts liquéfiés à partir de l'ouverture de décharge uniquement dans les cas où l'agent de collecte identifié par les moyens d'identification de l'agent de ramassage est évalué comme approprié;
dans lequel les moyens d'identification comprennent:
un lecteur de carte (4, 10) prévu au voisinage de l'ouverture d'entrée et/ou de l'ouverture de décharge, fournir une information fournie par une carte (9, 11) portée par l'utilisateur et/ou l'agent de collecte; et
des moyens d'identification pour identifier l'utilisateur et/ou l'agent de collecte sur la base de l'information lue par le lecteur de carte à partir de la carte portée par l'utilisateur et/ou l'agent de collecte; et
dans lequel les moyens d'identification identifient si ou non l'utilisateur et/ou l'agent de collecte est approprié, par demande, dans un poste central (6) gérant le dispositif de liquéfaction des déchets bruts, de l'information lue par le lecteur de carte sur la carte portée par l'utilisateur et/ou l'agent de collecte, au moyen de communications sans fil.

2. Dispositif de liquéfaction de déchets bruts selon la revendication 1, dans lequel les moyens de gestion servant à autoriser l'introduction de déchets bruts comprennent:
une porte (3, 22) qui ouvre et ferme l'ouverture d'entrée; et
des moyens de commande d'ouverture et de fermeture de porte pour ouvrir la porte au moyen d'une opération à distance par communication sans fil à partir du poste central si le poste central évalue que l'utilisateur est approprié.

3. Dispositif de liquéfaction de déchets bruts selon la revendication 1, dans lequel les moyens de gestion pour autoriser la décharge des déchets bruts liquéfiés comprennent: des moyens de manipulation pour manipuler l'ouverture de décharge; et des moyens de fermeture à clé pour fermer à clé l'ouverture de décharge; des moyens de commande de libération de la fermeture à clé pour libérer la fermeture à clé fournie par les moyens de fermeture à clé, au moyen d'une télécommande par communication dans fil à partir du poste central, si le poste central estime que l'agent de ramassage est approprié.

4. Procédé de gestion d'un dispositif (1) de liquéfaction de déchets bruts situé en une pluralité d'emplacements, pour liquéfier des déchets bruts introduits par l'intermédiaire d'une ouverture d'entrée (2, 20) par un couteau hacheur (24), stocker les déchets bruts liquéfiés dans une unité de stockage (29) et décharger les déchets bruts liquéfiés stockés par l'unité de stockage à partir d'une ouverture de décharge (8, 21) à des fins de collecte, **caractérisé en ce qu'**il comprend les étapes consistant à:
identifier un utilisateur qui désire introduire des déchets bruts par l'intermédiaire de l'ouverture d'entrée par le dispositif de liquéfaction de déchets bruts et/ou identifier un agent de collecte qui désire collecter des déchets bruts liquéfiés à partir de l'ouverture de décharge;
autoriser l'introduction de déchets bruts par l'intermédiaire de l'ouverture d'entrée uniquement dans les cas où l'utilisateur estimé comme étant approprié et/ou autoriser la collecte de déchets bruts liquéfiés à partir de l'ouverture de décharge uniquement dans les cas où l'agent de collecte estimé comme étant approprié;
dans lequel l'identification de l'utilisateur et/ou de l'agent de collecte est exécutée sur la base de l'information lue sur une carte (1, 11) portée par l'utilisateur et/ou l'agent de collecte; et
dans lequel une évaluation du fait que l'utilisateur et/ou l'agent de collecte est ou non approprié, est exécutée par demande, à un poste central (6) gérant le dispositif de liquéfaction des déchets bruts, l'information lue sur la carte, au moyen d'une communication sans fil.

5. Procédé de gestion d'un dispositif de liquéfaction de déchets bruts selon la revendication 4, selon lequel le dispositif de liquéfaction de déchets bruts comprend une porte (3, 22), qui ouvre et fermer l'ouverture d'entrée, et la porte est ouverte au moyen d'une télécommande par communication sans fil à partir du poste central, si le poste central estime que l'utilisateur est approprié.

6. Procédé de gestion d'un dispositif de liquéfaction de déchets bruts selon la revendication 4, selon lequel la quantité de déchets bruts introduite au moyen de l'ouverture d'entrée est mesurée et le volume d'entrée est totalisé et géré pour chaque utilisateur.

7. Procédé de gestion d'un dispositif de liquéfaction de déchets bruts selon la revendication 6, selon lequel la taxe ou le paiement est exécuté pour l'utilisation du dispositif de liquéfaction de déchets bruts, sur la base du volume d'entrée de déchets bruts tel qu'il est totalisé et géré pour chaque utilisateur.

8. Procédé de gestion d'un dispositif de liquéfaction de déchets bruts selon la revendication 4, selon lequel le dispositif de liquéfaction de déchets bruts comprend des moyens de fermeture à clé pour fermer à clé l'ouverture de décharge, les moyens de fermeture à clé étant libérés par une opération à distance par communication sans fil à partir du poste central si le poste central estimé que l'agent de collecte est approprié.

9. Procédé de gestion d'un dispositif de liquéfaction de déchets bruts selon la revendication 4, selon lequel la quantité de déchets bruts déchargés, qui sont délivrés par l'ouverture de décharge, est mesuré et le volume de décharge est totalisé et géré pour chaque dispositif de liquéfaction de déchets bruts.

10. Procédé de gestion d'un dispositif de liquéfaction de déchets bruts selon la revendication 9, selon lequel la taxe ou le paiement est exécuté pour l'utilisation du dispositif de liquéfaction de déchets bruts, sur la base du volume déchargé de déchets bruts tel qu'il est totalisé et géré pour chaque dispositif de liquéfaction de déchets bruts.
